(19)

Europäisches
Patentamt
European
Patent Office
Office européen
des brevets

(11) **EP 4 276 996 A1**

(12) # EUROPEAN PATENT APPLICATION
published in accordance with Art. 153(4) EPC

(43) Date of publication:
**15.11.2023 Bulletin 2023/46**

(21) Application number: **22899608.8**

(22) Date of filing: **07.03.2022**

(51) International Patent Classification (IPC):
***H01M 50/267*** (2021.01)

(86) International application number:
**PCT/CN2022/079508**

(87) International publication number:
**WO 2023/168553 (14.09.2023 Gazette 2023/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited
Ningde City, Fujian 352100 (CN)**

(72) Inventors:
• **LIU, Qian
Ningde
Fujian 352100 (CN)**
• **YE, Yonghuang
Ningde
Fujian 352100 (CN)**

• **JIN, Haizu
Ningde
Fujian 352100 (CN)**
• **LI, Quanguo
Ningde
Fujian 352100 (CN)**
• **XU, Xiaofu
Ningde
Fujian 352100 (CN)**
• **HE, Jianfu
Ningde
Fujian 352100 (CN)**

(74) Representative: **Gong, Jinping
CocreateIP
Eggenfeldenerstraße 56
81929 München (DE)**

(54) **BATTERY MODULE, BATTERY PACK AND ELECTRIC DEVICE**

(57)      The present application provides a battery module, a battery pack, and an electrical apparatus. The battery module of the present application includes: a first battery cell and a second battery cell, wherein the number a of the first battery cell is greater than or equal to the number b of the second battery cell. Assuming that the product of the volumetric energy density E1 and the thickness T1 of the first battery cell is X1, and the product of the volumetric energy density E2 and the thickness T2 of the second battery cell is X2, X1/ X2 satisfies: $0.35 \leq X1/X2 \leq 18$. Thus, the uniformity in energy density distribution between various battery cells and the overall volumetric energy density are improved.

**FIG. 3**

EP 4 276 996 A1

**Description**

**Technical Field**

The present application relates to the technical field of batteries, and in particular to a battery module, a battery pack, and an electrical apparatus.

**Background Art**

In recent years, with the continuous development of secondary batteries such as lithium-ion secondary batteries, secondary batteries have found wide use in energy storage power source systems such as hydropower, thermal power, wind power and solar power stations, as well as in electric tools, electric bicycles, electric motorcycles, electric vehicles, military equipment, aerospace and other fields.

In related art, a plurality of battery cells can be connected in series, in parallel or in a parallel-series pattern to achieve a larger capacity or power. It is known that different types (chemical systems) of battery cells of the same size are combined and connected in series to slow down the thermal diffusion of the battery module. However, when battery cells of different chemical systems are connected in series, due to the differences in the energy density and charge-discharge characteristics of various battery cells, the uniformity between various battery cell in the battery module is poor, and the energy transfer therebetween is slow, which affects the energy performance and safety performance of the overall battery module.

**Summary of the Invention**

In view of the abovementioned technical problems, the present application is proposed, to provide a battery module, a battery pack and an electrical apparatus with improved uniformity in energy density distribution between various battery cells and overall volumetric energy density.

To achieve the above object, a first aspect of the present application provides a battery module, including: a first battery cell and a second battery cell, where the number a of the first battery cell is greater than or equal to the number b of the second battery cell. Assuming that the product of the volumetric energy density $E_1$ and the thickness $T_1$ of the first battery cell is $X_1$, and the product of the volumetric energy density $E_2$ and the thickness $T_2$ of the second battery cell is $X_2$, $X_1/X_2$ satisfies: $0.35 \leq X_1/X_2 \leq 18$.

Therefore, the present application can improve the uniformity in energy density distribution between various battery cells and the overall volumetric energy density by combining and serially connecting various battery cells where the ratio of their products of volumetric energy density and thickness satisfies a specified range.

In any of the embodiments, $X_1/X_2$ satisfies: $0.45 \leq X_1/X_2 \leq 4.5$, and optionally, $0.7 \leq X_1/X_2 \leq 1.4$. Thus, the uniformity in energy density distribution between various battery cells and the overall volumetric energy density can be further improved.

In any of the embodiments, the number a of the first battery cell and the number b of the second battery cell satisfy: $1 \leq a/b \leq 50$, and optionally $2 \leq a/b \leq 10$. Thus, the uniformity in energy density distribution between various battery cells and the overall volumetric energy density can be further improved.

In any of the embodiments, when the volumetric energy density $E_2$ of the second battery cell is greater than 600 Wh/L, the ratio $T_1/T_2$ of the thickness $T_1$ of the first battery cell to the thickness $T_2$ of the second battery cell and the ratio of the number a of the first battery cell to the number b of the second battery cell satisfy: $1.05 \leq (T_1/T_2)*(a/b) \leq 1000$, and optionally $5 \leq (T_1/T_2)*(a/b) \leq 200$. When the volumetric energy density $E_2$ of the second battery cell is less than 600 Wh/L, the ratio $T_1/T_2$ of the thickness $T_1$ of the first battery cell to the thickness $T_2$ of the second battery cell and the ratio of the number a of the first battery cell to the number b of the second battery cell satisfy: $1 \leq (T_1/T_2)*(a/b) \leq 1000$, and optionally $1 \leq (T_1/T_2)*(a/b) \leq 250$. Therefore, the first battery cells and the second battery cells can be arranged in a reasonable ratio of numbers, to suppress the thermal spread of the battery module.

In any of the embodiments, the thickness $T_1$ of the first battery cell and the thickness $T_2$ of the second battery cell satisfy: $1 < T_1/T_2 \leq 20$, optionally, $1.02 \leq T_1/T_2 \leq 5$, and further optionally $1.05 \leq T_1/T_2 \leq 2.1$. Therefore, by defining the thickness ratio of the first battery cell and the second battery cell in the above range, the uniformity in energy density distribution between various battery cells and the overall volumetric energy density can be further improved.

In any of the embodiments, the volume $V_1$ of the first battery cell and the volume $V_2$ of the second battery cell satisfy: $1 \leq V_1/V_2 \leq 20$, optionally $1 \leq V_1/V_2 \leq 5$, and further optionally $1 \leq V_1/V_2 \leq 2.1$. Thus, the uniformity in energy density distribution between various battery cells and the overall volumetric energy density can be further improved.

In any of the embodiments, the volumetric energy density $E_1$ of the first battery cell and the volumetric energy density $E_1$ of the second battery cell satisfy: $0.3 \leq E_1/E_2 \leq 1$. Thus, the uniformity in energy density distribution between various battery cells and the overall volumetric energy density can be further improved.

In any of the embodiments, the volumetric energy density E1 of the first battery cell satisfies: 155 Wh/L≤E1≤500 Wh/L. Thus, the thermal spread of the battery module can be further suppressed.

In any of the embodiments, the volumetric energy density E2 of the second battery cell satisfies: 450 Wh/L≤E2≤800 Wh/L. Thus, the thermal spread of the battery module can be further suppressed.

In any of the embodiments, the gravimetric energy density G1 of the first battery cell and the gravimetric energy density G2 of the second battery cell satisfy: 0.3≤G1/G2≤1. Thus, the uniformity in energy density distribution between various battery cells and the overall gravimetric energy density can be improved.

In any of the embodiments, the gravimetric energy density G1 of the first battery cell satisfies: 65 Wh/kg≤G1≤235 Wh/kg. Thus, the uniformity in energy density distribution between various battery cells and the overall gravimetric energy density can be further improved.

In any of the embodiments, the gravimetric energy density G2 of the second battery cell satisfies: 220 Wh/kg≤G2≤400 Wh/kg. Thus, the uniformity in energy density distribution between various battery cells and the overall gravimetric energy density can be further improved.

In any of the embodiments, in a cross section perpendicular to the thickness T1 of the first battery cell, the first battery cell and the second battery cell have approximately the same cross-sectional area, and the height H1 of the first battery cell and the height H2 of the second battery cell satisfy: 0.9≤H1/H2≤1.1, and optionally H1/H2=1; and the width W1 of the first battery cell and the width W2 of the second battery cell satisfy: 0.9≤W1/W2≤1.1, and optionally W1/W2=1. Accordingly, it is possible to reduce the superfluous space when the battery cells are arranged, and improve the overall volumetric energy density of the battery module.

In any of the embodiments, the first battery cell or a battery group formed of a plurality of parallelly connected first battery cells is connected in series to the second battery cell or a battery group formed of a plurality of parallelly connected second battery cells. As such, a greater capacity or power can be achieved.

In any of the embodiments, the first battery cell is a sodium-ion battery, and the second battery cell is a lithium-ion battery. Alternatively, the first battery cell is one or more of a lithium iron phosphate battery, a lithium manganese phosphate battery, a lithium manganese iron phosphate battery, a lithium manganate battery, a lithium titanate battery, and a lithium vanadium phosphate battery, and the second battery cell is one or more of a lithium nickel cobalt manganese oxide battery, a lithium nickel cobalt aluminum oxide battery, a lithium nickel cobalt manganese aluminum oxide battery, a lithium cobalt oxide battery, and a lithium manganese nickel oxide battery. In this way, battery cells of different chemical systems can be combined, to give the advantages of batteries of each system.

In any of the embodiments, the second battery cells are spaced apart by a plurality of the first battery cells. Thus, the thermal spread of the battery module can be further suppressed.

In any of the embodiments, some of the second battery cells are disposed at an end or in the middle of the battery module. As a result, the heat generated by the second battery cell can be quickly exchanged with the outside, which can further suppress the thermal spread of the battery module.

A second aspect of the present application provides a battery pack, including a battery module according to the first aspect of the present application.

A third aspect of the present application provides an electrical apparatus, which comprises the battery pack according to the second aspect of the present application.

Effects of the present invention

By adopting the present invention, it is possible to provide a battery module, a battery pack and an electric apparatus with improved uniformity in energy density distribution between various battery cells and overall volumetric energy density.

**Description of Drawings**

Fig. 1 is a schematic view of a secondary battery according to an embodiment of the present application.
Fig. 2 is an exploded view of the secondary battery according to an embodiment of the present application shown in Fig. 1.
Fig. 3 is a schematic view of a battery module according to an embodiment of the present application.
Fig. 4 is a schematic view of a battery pack according to an embodiment of the present application.
Fig. 5 is an exploded view of the battery pack according to an embodiment of the present application shown in Fig. 4.
Fig. 6 is a schematic view of an electrical apparatus in which a secondary battery is used as a power source according to an embodiment of the present application.

Description of reference numerals

1 battery pack; 2 upper box; 3 lower box; 4 battery module; 5 battery cell; 5A first battery cell; 5B second battery cell; 5a, 5b end face; 5c, 5d, 5e, 5f side surface; 51 case; 52 electrode assembly; 53 cover plate.

**Detailed Description**

Hereinafter, the embodiments of the battery pack and electrical apparatus of the present application are described in detail and specifically disclosed with reference to of the drawings as appropriate. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate the understanding by those skilled in the art. In addition, the drawings and subsequent descriptions are provided for those skilled in the art to fully understand the present application, and are not intended to limit the subject matter recited in the claims.

The "range" disclosed in the present application is defined in terms of lower and upper limits, and a given range is defined by selecting a lower limit and an upper limit, which define the boundaries of a particular range. A range defined in this manner may be inclusive or exclusive of end values, and may be arbitrarily combined, that is, any lower limit may be combined with any upper limit to form a range. For example, if ranges of 60-120 and 80-110 are listed for a particular parameter, it is to be understood that ranges of 60-110 and 80-120 are also expected. Additionally, if the minimum range values 1 and 2 and the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all real numbers between "0-5" have been listed herein, and "0-5" is just an abbreviated representation of the combination of these numerical values. Additionally, when it is stated that a certain parameter is an integer of $\geq 2$, it is equivalent to disclosing that the parameter is, for example, an integer of 2, 3, 4, 5, 6, 7, 8, 9, 10, 11, 12, etc.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method comprises steps (a) and (b), meaning that the method may comprise steps (a) and (b) performed sequentially, or may comprise steps (b) and (a) performed sequentially. For example, the reference to the method may further include step (c), meaning that step (c) may be added to the method in any order. For example, the method may include steps (a), (b) and (c), include steps (a), (c) and (b), or steps (c), (a) and (b), and the like.

Unless otherwise specifically stated, "comprising" and "including" mentioned in the present application indicate open inclusion or closed inclusion. For example, the "including" and "comprising" may indicate that it is possible to include or comprise other components not listed, and it is also possible to include or comprise only the listed components.

Unless otherwise specified, the term "or" is inclusive in the present application. By way of example, the phrase "A or B" means "A, B, or both A and B". More specifically, the condition "A or B" is satisfied by any one of the following conditions: A is true (or present) and B is false (or absent); A is false (or absent) and B is true (or present); or both A and B are true (or present).

At present, from the perspective of development of the market, power batteries will be more and more widely used. The power batteries are not only used in energy storage power source systems such as hydropower, thermal powder, wind powder and solar power stations, but also in electric vehicles such as electric bicycles, electric motorcycles and electric cars, and military equipment and aerospace fields. With the continuously widening of the application field of power batteries, the market demand also increases constantly.

The present inventors have noticed that in a battery module composed of a combination of different types of battery cells connected in series, the energy density distribution in the battery module is uneven and the energy transfer between the battery cells is slow due to the difference in energy density of the battery cells, affecting the energy performance and safety performance of the overall battery module.

Therefore, it occurs to the present inventors that when different types of battery cells are arranged to form a battery module or a battery pack, the height and length of each battery cell is set to be approximately the same, and the ratio $((E1{*}T1)/(E2{*}T2))$ of products of the thickness T and the volumetric energy density E is set within a certain range, so that the energy density distribution in the module is uniform, thereby improving the energy performance and safety performance of the overall battery module.

[Battery cells];

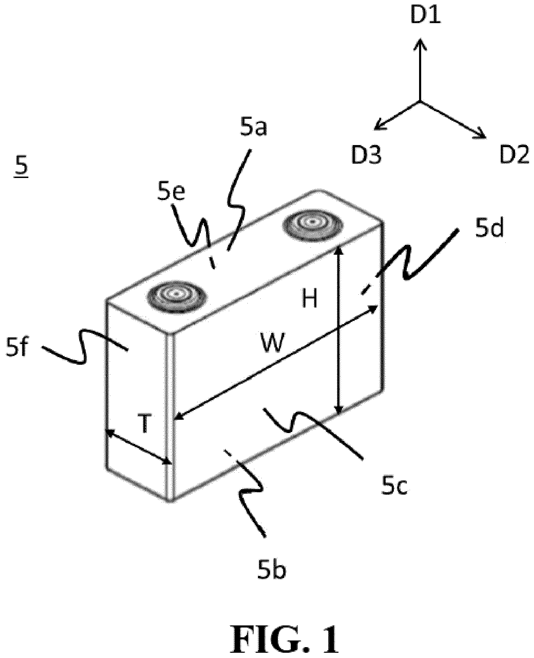

The present application has no particular limitation on the shape of the battery cell of the secondary battery, which can be cylindrical, square or any other shape. For example, Fig. 1 shows an example of a battery cell 5 of a secondary battery having a square structure.

The battery cell 5 includes a pair of end faces 5a and 5b and side faces 5c, 5d, 5e, and Sf connecting the pair of end faces 5a and 5b. When viewed from a direction parallel to the end faces (a direction perpendicular to the height direction D1), the side surfaces 5c and Se of the battery cell 5 with the largest projection area are set as the first sides (planes parallel to the height direction D1 and the width direction D3), and the maximum length of the battery cell in the direction perpendicular to the first side surfaces 5c and 5e (thickness direction D2) is the thickness T of the battery cell.

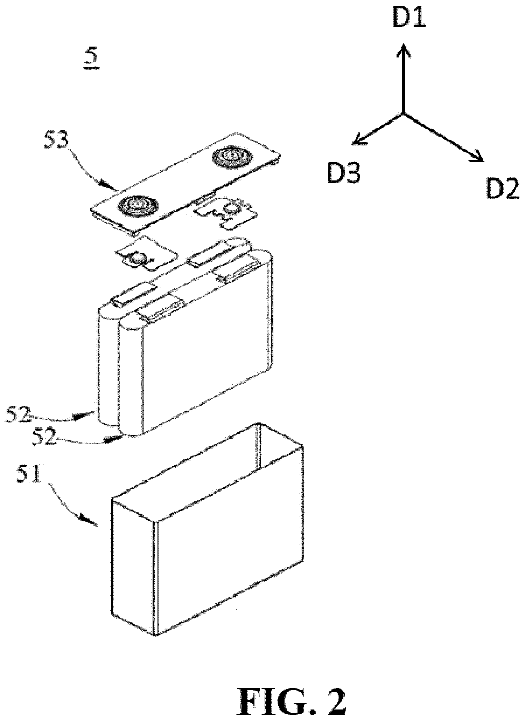

In some embodiments, referring to Fig. 2, the outer package may comprise a case 51 and a cover plate 53. Here, the case 51 can include a bottom plate and a side plate connected to the bottom plate, where the bottom plate and the side plate defines an accommodating cavity. The case 51 has an opening that communicates with the accommodating cavity, and the cover plate 53 can cover the opening to close the accommodating cavity. A positive electrode plate, a negative electrode plate, and a separator may be wound or stacked into an electrode assembly 52. The electrode assembly 52 is encapsulated within the accommodating cavity. The electrolyte solution impregnates the electrode assembly 52. The number of electrode assemblies 52 comprised in the secondary battery 5 may be one or more, which can be selected by those skilled in the art according to specific actual requirements.

[Battery module]

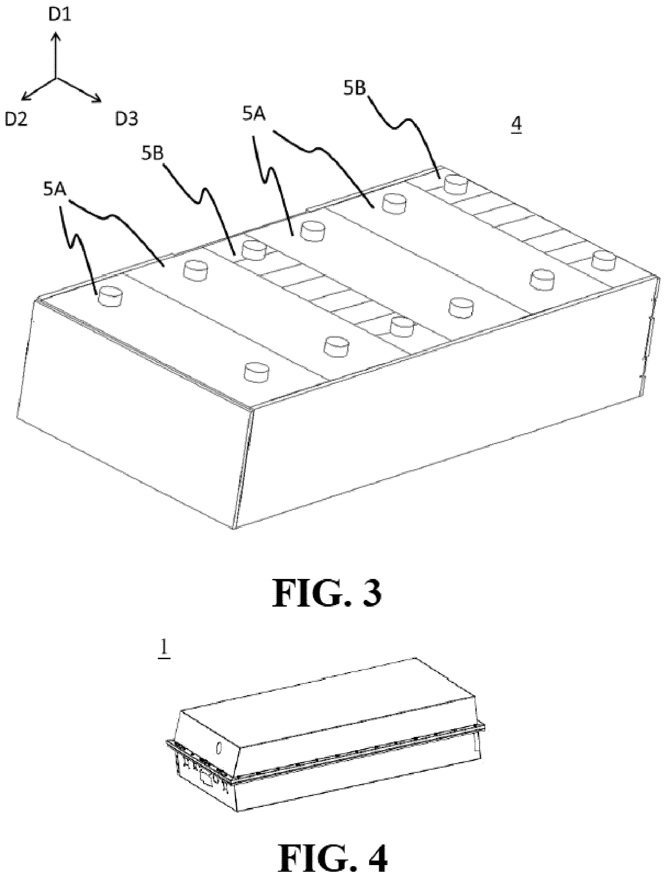

Fig. 3 shows an example of a battery module 4. Referring to Fig. 3, in the battery module 4, a plurality of battery cells 5A and 5B may be sequentially arranged in the length direction of the battery module 4. Of course, they can be arranged in any other way. A plurality of secondary batteries 5 may further be fixed by fasteners. Optionally, the battery module 4 may further include a shell having an accommodating space, in which the plurality of secondary batteries 5 are accommodated.

In an embodiment of the present invention, the present application provides a battery module, including: a first battery cell 5A and a second battery cell 5B, where the number a of the first battery cell 5A is greater than or equal to the number b of the second battery cell 5B. Assuming that the product of the volumetric energy density E1 and the thickness T1 of the first battery cell 5A is X1, and the product of the volumetric energy density E2 and the thickness T2 of the second battery cell 5B is X2, X1/ X2 satisfies: $0.35 \leq X1/X2 \leq 18$.

Therefore, the present application can improve the uniformity in energy density distribution between various battery cells and the overall volumetric energy density by combining and serially connecting various battery cells where the ratio of their products of volumetric energy density and thickness satisfies a specified range.

The present inventors find that: E1*T1 is the energy per unit area of the first type of battery cell in a direction perpendicular to the thickness direction, and E2*T2 is the energy per unit area of the second type of battery cell in a direction perpendicular to the thickness direction. (E1*T1)/(E2*T2) reflects the uniformity in energy distribution when the two types of battery cells are combined and connected in series in the module and battery pack. When the value of (E1*T1)/(E2*T2) exceeds the above range, the energy distribution in the combined and serially connected module is non-uniform, and the non-uniform energy distribution not only affects the energy density of the module and battery pack, but also affects the energy transfer inside the module and battery pack. When both types of battery cells have high energy density, and the number of battery cells with higher energy density is larger, the energy density of the equivalent single battery cells is high, and the energy density of the module and battery pack is also high. When the energy distribution inside the combined and serially connected modules and the battery pack is relatively uniform, the energy consistency between the battery cells is high. Therefore, when the ambient temperature changes, the energy transfer between the battery cells is more quickly, and the high-temperature performance and low-temperature performance and safety performance of the whole module are better.

In some embodiments, X1/X2 satisfies: $0.45 \leq X1/X2 \leq 4.5$, and optionally, $0.7 \leq X1/X2 \leq 1.4$. Thus, the uniformity in energy density distribution between various battery cells and the overall volumetric energy density can be further improved.

In some embodiments, the number a of the first battery cell 5A and the number b of the second battery cell 5B satisfy: $1 \leq a/b \leq 50$, and optionally $2 \leq a/b \leq 10$. Thus, the uniformity in energy density distribution between various battery cells and the overall volumetric energy density can be further improved. When a/b satisfies an appropriate range, the overall volumetric energy density can be improved by setting an appropriate proportion of the second battery cells 5B, and the risk of thermal spread caused by too many second battery cells 5B can be reduced.

In some embodiments, when the volumetric energy density E2 of the second battery cell 5B is greater than 600 Wh/L, the ratio T1/T2 of the thickness T1 of the first battery cell 5A to the thickness T2 of the second battery cell 5B and the ratio of the number a of the first battery cell 5A to the number b of the second battery cell 5B satisfy:

$1.05 \leq (T1/T2)*(a/b) \leq 1000$, and optionally $5 \leq (T1/T2)*(a/b) \leq 200$. When the volumetric energy density E2 of the second battery cell 5B is less than 600 Wh/L, the ratio T1/T2 of the thickness T1 of the first battery cell 5A to the thickness T2 of the second battery cell 5B and the ratio of the number a of the first battery cell 5A to the number b of the second battery cell 5B satisfy: $1 \leq (T1/T2)*(a/b) \leq 1000$, and optionally $1 \leq (T1/T2)*(a/b) \leq 250$. Therefore, the first battery cells 5A and the second battery cells 5B can be arranged in a reasonable ratio of numbers, to suppress the thermal spread of the battery module. That is, according to the volumetric energy density of the second battery cell 5B (whether thermal runaway is prone to occur), (T1/T2)*(a/b) is set in different ranges, so that the energy density is increased as much as possible when there is no risk of thermal runaway, and the occurrence of thermal runaway is suppressed when there is a risk of thermal runaway. Specifically, (T1/T2)*(a/b) is a parameter that comprehensively takes the ratio of the thickness to the set number of the second battery cell into account, which can truly reflect the proportion of energy per unit area in a direction perpendicular to the thickness direction of the second battery cell 5B that is more prone to thermal runaway in the battery module. When the volumetric energy density of the second battery cell 5B is relatively high (more prone to thermal runaway), by setting (T1/T2)*(a/b) in an appropriate range, thermal runaway caused by the second battery cell 5B can be avoided, thereby improving the safety of the battery module.

In some embodiments, the thickness T1 of the first battery cell 5A and the thickness T2 of the second battery cell 5B satisfy: $1<T1/T2 \leq 20$, optionally, $1.02 \leq T1/T2 \leq 5$, and further optionally $1.05 \leq T1/T2 \leq 2.1$. Therefore, by defining the thickness ratio of the first battery cell 5A and the second battery cell 5B in the above range, the uniformity in energy density distribution between various battery cells and the overall volumetric energy density can be further improved.

In some embodiments, the volume V1 of the first battery cell 5A and the volume V2 of the second battery cell 5B satisfy: $1 \leq V1/V2 \leq 20$, optionally $1 \leq V1/V2 \leq 5$, and further optionally $1 \leq V1/V2 \leq 2.1$. Thus, the uniformity in energy density distribution between various battery cells and the overall volumetric energy density can be further improved.

In some embodiments, the volumetric energy density E1 of the first battery cell 5A and the volumetric energy density E1 of second battery cell 5B satisfy: $0.3 \leq E1/E2 \leq 1$. Thus, the uniformity in energy density distribution between various battery cells and the overall volumetric energy density can be further improved.

In some embodiments, the volumetric energy density E1 of the first battery cell 5A satisfies: $155 \text{ Wh/L} \leq E1 \leq 500 \text{ Wh/L}$. Thus, the thermal spread of the battery module can be further suppressed. In some embodiments, the volumetric energy density E2 of the second battery cell 5B satisfies: $450 \text{ Wh/L} \leq E2 \leq 800 \text{ Wh/L}$. Thus, the thermal spread of the battery module can be further suppressed. Through the differential setting of the volumetric energy density of the first battery cell 5A and the second battery cell 5B, heat generated by the second battery cell 5B with a higher volumetric energy density can be absorbed by the first battery cell 5A with a lower volumetric energy density, thereby inhibiting the thermal spread of the battery module.

In some embodiments, the gravimetric energy density G1 of the first battery cell 5A and the gravimetric energy density G2 of the second battery cell 5B satisfy: $0.3 \leq G1/G2 \leq 1$. Thus, the uniformity in energy density distribution between various battery cells and the overall gravimetric energy density can be improved.

In some embodiments, the gravimetric energy density G1 of the first battery cell 5A satisfies: $65 \text{ Wh/kg} \leq G1 \leq 235 \text{ Wh/kg}$. Thus, the uniformity in energy density distribution between various battery cells and the overall gravimetric energy density can be further improved.

In some embodiments, the gravimetric energy density G2 of the second battery cell 5B satisfies: $220 \text{ Wh/kg} \leq G2 \leq 400 \text{ Wh/kg}$. Thus, the uniformity in energy density distribution between various battery cells and the overall gravimetric energy density can further improved.

In some embodiments, in a cross section perpendicular to the thickness T1 of the first battery cell 5A, the first battery cell 5A and the second battery cell 5B have approximately the same cross-sectional area, and the height H1 of first battery cell 5A and the height H2 of the second battery cell 5B satisfy: $0.9 \leq H1/H2 \leq 1.1$, and optionally $H1/H2=1$; and the width W1 of first battery cell 5A and the width W2 of the second battery cell 5B satisfy: $0.9 \leq W1/W2 \leq 1.1$, and optionally $W1/W2=1$. Thus, the space inside the battery can be regulated by controlling the size of the battery cells, so as to improve the overall volumetric energy density of the battery module.

In some embodiments, the first battery cell 5A or a battery group formed of a plurality of parallelly connected first battery cells 5A is connected in series to the second battery cell 5B or a battery group formed of a plurality of parallelly connected second battery cells 5B. As such, an increase in the battery capacity or power can be achieved.

In some embodiments, the first battery cell 5A is a sodium-ion battery, and the second battery cell 5B is a lithium-ion battery. Alternatively, the first battery cell 5A is one or more of a lithium iron phosphate battery, a lithium manganese phosphate battery, a lithium manganese iron phosphate battery, a lithium manganate battery, a lithium titanate battery, and a lithium vanadium phosphate battery, and the second battery cell 5B is one or more of a lithium nickel cobalt manganese oxide battery, a lithium nickel cobalt aluminum oxide battery, a lithium nickel cobalt manganese aluminum oxide battery, a lithium cobalt oxide battery, and a lithium manganese nickel oxide battery. In this way, battery cells of different chemical systems can be combined, to give the advantages of batteries of each system.

In some embodiments, the sodium-ion battery includes a negative electrode plate having hard carbon as the negative electrode active material and a positive electrode platehaving one or more selected from a sodium-transition metal oxide, a polyanionic compound, and a Prussian blue compound as the positive electrode active material.

In some embodiments, as shown in Fig.3, the second battery cells 5B are spaced apart by a plurality of first battery cells 5A. Thus, the thermal spread of the battery module can be further suppressed.

In some embodiments, some of the second battery cells 5B are disposed at an end or in the middle of battery module 4. As a result, the heat generated by the second battery cell with large heat generation due to the high volumetric energy density can be rapidly exchanged with the outside through the case of the battery module, so the heat is conducted to the outside of the battery module, so as to further suppress the thermal spread of the battery module.

In some embodiments, the first battery cell 5A and the second battery cell 5B may be arranged in a two-dimensional pattern (array). The second battery cells 5B can be arranged at the four sides of the battery module or in the middle of the battery module. When the ambient temperature is high, the heat generated by the second battery cells 5B arranged at the four sides of the battery module can be rapidly exchanged with the outside, to further inhibit the thermal spread of the battery module. When the ambient temperature is low, the heat generated by the second battery cells 5B arranged in the middle of the battery module can be quickly transferred to the surrounding battery cells, to improve the low-temperature performance of the battery module.

[Battery pack]

In some embodiments, the battery module may further be assembled into a battery pack, the number of battery module contained in the battery pack may be one or more, and the specific number can be selected by those skilled in the art according to the use and capacity of the battery pack.

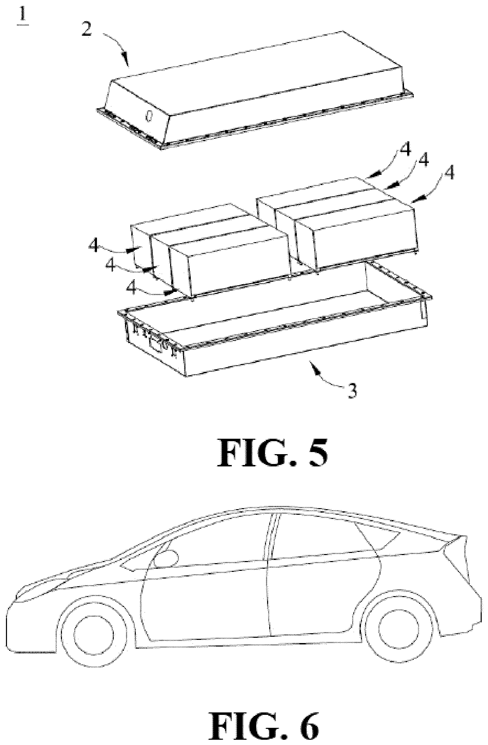

Figs. 4 and 5 show an example of a battery pack 1. Referring to Figs. 4 and 5, the battery pack 1 may include a battery box and a plurality of battery modules 4 provided in the battery box. The battery box includes an upper box 2 and a lower box 3, where the upper box 2 can cover the lower box 3, and defines an enclosed space for accommodating the battery module 4. The plurality of battery modules 4 can be arranged in the battery box in any pattern.

[Secondary battery]

In an embodiment of the present application, a secondary battery is provided.

Generally, the secondary battery includes a positive electrode plate, a negative electrodeplate, an electrolyte, and a separator. During charging and discharging of the battery, active ions are intercalated and deintercalated back and forth between the positive electrode plateand the negative electrode plate. The electrolyte serves to conduct ions between the positive electrode plate and the negative electrode plate. The separator is provided between the positive electrode plate and the negative electrode plate, and mainly functions to prevent a short circuit between the positive electrode and the negative electrode while allowing ions to pass through.

[Positive electrode plate]

The positive electrode plate includes a positive electrode current collector and a positive electrode film layer provided on at least one surface of the positive electrode current collector. The positive electrode film layer includes a positive electrode active material according to the first aspect of the present application.

For example, the positive electrode current collector has two opposite surfaces in its own thickness direction, and the positive electrode film layer is arranged on either or both of the two opposite surfaces of the positive electrode current collector.

In some embodiments, the positive electrode current collector can be a metal foil or a composite current collector. For example, an aluminum foil can be used as the metal foil. The composite current collector may comprise a high molecular material substrate layer and a metal layer formed on at least one surface of the high molecular material substrate layer. The composite current collector can be formed by forming a metal material (aluminum, aluminum alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), and polyethylene (PE)).

In some embodiments, the positive electrode active material may be a positive electrode active material for batteries well known in the art. As an example, the positive electrode active material may include at least one of the following materials: a lithium-containing phosphate of olivine structure, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Here, examples of the lithium-transition metal oxide may include, but are not limited to, at least one of a lithium-cobalt oxide (such as $LiCoO_2$), lithium-nickel oxide (such as $LiNiO_2$), lithium-manganese oxide (such as $LiMnO_2$ and $LiMn_2O_4$), lithium-nickel-cobalt oxide, lithium-manganese-cobalt oxide, lithium-nickel-manganese oxide, lithium-nickel-cobalt-manganese oxide (such as $LiNi_{1/3}Co_{1/3}Mn_{1/3}O_2$ (also abbreviated as $NCM_{333}$), $LiNi_{0.5}Co_{0.2}Mn_{0.3}O_2$ (also abbreviated as $NCM_{523}$), $LiNi_{0.5}Co_{0.25}Mn_{0.25}O_2$ (also abbreviated as $NCM_{211}$), $LiNi_{0.6}Co_{0.2}Mn_{0.2}O_2$ (also abbreviated as $NCM_{622}$), $LiNi_{0.8}Co_{0.1}Mn_{0.1}O_2$ (also abbreviated as $NCM_{811}$), lithium-nickel-cobalt-aluminum oxide (such as $LiNi_{0.85}Co_{0.15}Al_{0.05}O_2$) and their respective modified compounds. Examples of the lithium-containing phosphate of olivine structure may include, but are not limited to, at least one of lithium iron phosphate (such as $LiFePO_4$ (also referred to as LFP)), a composite material of lithium iron phosphate and carbon, lithium manganese phosphate (such as $LiMnPO_4$), a composite material of lithium manganese phosphate and carbon, lithium iron manganese phosphate, and a composite material of lithium manganese iron phosphate and carbon.

In some embodiments, the positive electrode film layer further optionally comprises a binder. For example, the binder may include at least one of polyvinylidene fluoride (PVDF), polytetrafluoroethylene (PTFE), a vinylidene difluoride-tetrafluoroethylene-propylene terpolymer, a vinylidene difluoride-hexafluoropropylene-tetrafluoroethylene terpolymer, a tetrafluoroethylene-hexafluoropropylene copolymer and a fluorine-containing acrylate resin.

In some embodiments, the positive electrode film layer further optionally comprises a conductive agent. For example, the conductive agent may include at least one of superconducting carbon, acetylene black, carbon black, Ketjen black, carbon dot, carbon nanotubes, graphene, and carbon nanofibers.

In some embodiments, the positive electrode plate can be prepared by dispersing the components for preparing the positive electrode plate, for example, the positive electrode active material, the conductive agent, the binder and any other components in a solvent (for example, N-methyl pyrrolidone) to form a positive electrode slurry; and applying the positive electrode slurry on a positive electrode current collector, followed by oven drying, cold pressing and other procedures, to obtain the positive electrode plate.

Moreover, in the positive electrode plate, the positive electrode active material may include one or more of a sodium-transition metal oxide, a polyanionic compound and a Prussian blue compound.

Examples of the sodium-transition metal oxides include, for example:

$Na_{1-x}Cu_hFe_kMn_1M^1_mO_{2-y}$, where $M^1$ is one or more of Li, Be, B, Mg, Al, K, Ca, Ti, Co, Ni, Zn, Ga, Sr, Y, Nb, Mo, In, Sn and Ba, $0<x\leq0.33$, $0<h\leq0.24$, $0\leq k\leq0.32$, $0<1\leq0.68$, $0\leq m<0.1$, $h+k+1+m=1$, and $0\leq y<0.2$;
$Na_{0.67}Mn_{0.7}Ni_zM^2_{0.3-z}O_2$, where $M^2$ is one or more of Li, Mg, Al, Ca, Ti, Fe, Cu, Zn and Ba, and $0<z\leq0.1$; and
$Na_aLi_bNi_cMn_dFe_eO_2$, where $0.67<a\leq1$, $0<b<0.2$, $0<c<0.3$, $0.67<d+e<0.8$, and $b+c+d+e=1$.

Examples of the polyanionic compound include, for example:

$A^1_fM^3_g(PO_4)iO_jX^1_{3-j}$, where A is one or more of H, Li, Na, K and $NH_4$, $M^3$ is one or more of Ti, Cr, Mn, Fe, Co, Ni, V, Cu and Zn, $X^1$ is one or more of F, Cl and Br, $0<f\leq4$, $0<g\leq2$, $1\leq i\leq3$, and $0\leq j\leq2$;
$Na_nM^4PO_4X^2$, where $M^4$ is one or more of Mn, Fe, Co, Ni, Cu and Zn, $X^2$ is one or more of F, Cl and Br, and $0<n\leq2$;
$Na_pM^5_q(SO_4)_3$, where $M^5$ is one or more of Mn, Fe, Co, Ni, Cu and Zn, $0<p\leq2$, and $0<q\leq2$; and
$Na_sMn_tFe_{3-t}(PO_4)_2(P_2O_7)$, where $0<s\leq4$, and $0<t\leq3$, for example t is 0, 1, 1.5, 2 or 3.

Examples of the Prussian blue compounds include, for example:

$A_uM^6_v[M^7(CN)_6]_w \cdot xH_2O$, where A is one or more of $H^+$, $NH_4^+$, an alkali metal cation and an alkaline earth metal cation, $M^6$ and $M^7$ are each independently one or more of transition metal cations, $0<u\leq2$, $0<v\leq1$, $0<w\leq1$, and $0<x<6$. For example, A is one or more of $H^+$, $Li^+$, $Na^+$, $K^+$, $NH_4^+$, $Rb^+$, $Cs^+$, $Fr^+$, $Be^{2+}$, $Mg^{2+}$, $Ca^{2+}$, $Sr^{2+}$, $Ba^{2+}$ and $Ra^{2+}$, and $M^6$ and $M^7$ are each independently cations of one or more of transition metal elements Ti, V, Cr, Mn, Fe, Co, Ni, Cu, Zn, Sn and W. Preferably, A is one or more of $Li^+$, $Na^+$ and $K^+$, $M^6$ is a cation of one or more of transition metal elements Mn, Fe, Co, Ni and Cu, and $M^7$ is a cation of one or more of transition metal elements Mn, Fe, Co, Ni and Cu.

The positive electrode active material layer also optionally includes a conductive agent and a binder. The conductive agent is used to improve the conductivity of the positive electrode active material layer, and the binder is used to firmly bond the positive electrode active material and the binder to the positive electrode current collector. There is no particular limitation on the type of the conductive agent and the binder in the present invention, and they can be selected according to actual needs.

For example, the conductive agent may be one or more of superconducting carbon, acetylene black, carbon black, Ketjen black, carbon dots, carbon nanotubes, graphene and carbon nanofibers.; and the binder may be one or more of styrene butadiene rubber (SBR), water-based acrylic resin, carboxymethyl cellulose (CMC), polyvinylidene fluoride (PVDF), polytetrafluoroethylene (PTFE), ethylene-vinyl acetate copolymer (EVA), and polyvinyl alcohol (PVA).

The positive electrode current collector can be a metal foil, a carbon-coated metal foil or a porous metal plate, and preferably aluminum foil.

[Negative electrode plate]

The negative electrode plate includes a negative electrode current collector and a negative electrode film layer arranged on at least one surface of the negative electrode current collector. The negative electrode film layer includes a negative electrode active material.

For example, the negative electrode current collector has two opposite surfaces in its own thickness direction, and the negative electrode film layer is provided on either one or both of the two opposite surfaces of the negative electrode current collector.

In some embodiments, the negative electrode current collector can be a metal foil or a composite current collector. For example, a copper foil can be used as the metal foil. The composite current collector may comprise a high molecular material substrate layer and a metal layer formed on at least one surface of the high molecular material substrate. The composite current collector can be formed by forming a metal material (copper, copper alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), polyethylene (PE), and the like).

In some embodiments, the negative electrode active material may be a negative electrode active material for batteries well known in the art. As an example, the negative electrode active material may include at least one of artificial graphite, natural graphite, soft carbon, hard carbon, a silicon-based material, a tin-based material, lithium titanate, and the like. The silicon-based material may be at least one selected from elemental silicon, a silicon-oxygen compound, a silicon-carbon composite, a silicon-nitrogen composite, and a silicon alloy. The tin-based material may be at least one selected from elemental tin, a tin-oxygen compound, and a tin alloy. However, the present application is not limited to these materials, and other conventional materials useful as negative electrode active materials for batteries can also be used. These negative electrode active materials may be used alone or in combination of two or more thereof.

In some embodiments, the negative electrode film layer further optionally comprises a binder. The binder may be at least one selected from styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally comprises a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer may further optionally comprise other auxiliaries, for example, a thickener (e. g., sodium carboxymethyl cellulose (CMC-Na)) and the like.

In some embodiments, the negative electrode plate can be prepared by dispersing the components for preparing the negative electrode plate, for example, the negative electrode active material, the conductive agent, the binder and any other components in a solvent (for example, deionized water) to form a negative electrode slurry; and applying the negative electrode slurry on a negative electrode current collector, followed by oven drying, cold pressing and other procedures, to obtain the negative electrode plate.

[Electrolyte]

The electrolyte serves to conduct ions between the positive electrode plate and the negative electrode plate. The type of the electrolyte is not particularly limited in the present application, and can be selected according to requirements. For example, the electrolyte may be in a liquid, gel, or full solid state.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluoro bis(oxalato)phosphate, and lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate ethyl propionate, propyl propionate, methyl butyrate, ethyl butyrate, 1,4-butyrolactone, sulfolane, dimethyl sulfone, ethyl methyl sulfone and diethyl sulfone.

In some embodiments, the electrolyte solution further optionally comprises an additive. For example, the additive may include a negative electrode film-forming additive, a positive electrode film-forming additive, and also include additives that can improve certain battery performances, such as an additive that improves the overcharge performance of the battery, an additive that improves the high-temperature performance or low-temperature performance of the battery, and the like.

[Separator]

In some embodiments, the secondary battery further includes a separator. The type of the separator is not particularly limited in the present application, and any well-known separator with a porous structure having good chemical stability and mechanical stability may be selected.

In some embodiments, the material of the separator may be selected from at least one of glass fiber, non-woven cloth, polyethylene, polypropylene, and polyvinylidene fluoride. The separator may be a single-layer film or a multi-layer composite film, and is not particularly limited. When the separator is a multi-layer composite film, the material of each layer may be the same or different, which is not particularly limited.

In some embodiments, the positive electrode plate, the negative electrode plate, and the separator can be made into an electrode assembly by a winding process or a lamination process.

In some embodiments, the secondary battery may include an outer package. The outer package can be used to encapsulate the above-mentioned electrode assembly and electrolyte.

In some embodiments, the outer package of the secondary battery may be a hard case, such as a hard plastic case, an aluminum case, a steel case, and the like. The outer package of the secondary battery can also be a soft pack, such as a bag-type soft pack. The material of the soft pack can be a plastic, and examples of the plastic include polypropylene, polybutylene terephthalate, and polybutylene succinate.

In addition, the present application further provides an electrical apparatus, and the electrical apparatus includes at least one of the secondary battery, the battery module, or the battery pack provided in the present application. The secondary battery, battery module, or battery pack can be used as a power source for the electrical apparatus, and can also be used as an energy storage unit for the electrical apparatus. The electrical apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, and an energy storage system, etc.

For the electrical apparatus, the secondary battery, the battery module, or the battery pack can be selected according to the requirements during use.

Fig. 6 shows an example of an electrical apparatus. The electrical apparatus is an all-electric vehicle, a hybrid electric vehicle, or a plug-in hybrid electric vehicle, etc. In order to meet the requirements of the electrical apparatus for high power and high energy density of secondary batteries, a battery pack or a battery module may be used.

The device may also be, for example, a mobile phone, a tablet computer, and a laptop, etc. The apparatus is generally required to be light and thin, and may use a secondary battery as a power source.

Examples

Examples of the present application will be described hereinafter. The examples described below are exemplary and only used to explain the present application, and should not be construed as a limitation on the present application. Where specific techniques or conditions are not indicated in the examples, the techniques or conditions described in the literatures in the art or described in the product specifications are followed. The reagents or instruments for which no manufacturers are noted are all common products commercially available from the market.

(I) Preparation of battery cell

I. Preparation of first battery bell

[Preparation Example I-1]

1) Preparation of positive electrode plate:

The positive electrode active material $Na_3V_2(PO_4)_2F_3$, the conductive agent acetylene black, and the binder polyvinylidene fluoride (PVDF) were dispersed at a weight ratio of 80: 10: 10 in a suitable amount of N-methylpyrrolidone (NMP), and mixed by fully stirring to form a uniform positive electrode slurry. The positive electrode slurry was applied to a 12 $\mu$m-thick aluminum foil as a positive electrode current collector, dried at 100°C, and pressed to obtain a positive electrode plate.

2) Preparation of negative electrode plate

The negative electrode active material hard carbon, the conductive agent acetylene black, the binder styrene butadiene rubber (SBCs), and the thickener carboxymethyl cellulose (CMC) were mixed at a weight ratio of 90:5:4:1 in an appropriate amount of deionized water by fully stirring to form a uniform negative electrode slurry. The negative electrode slurry was applied on a 12 $\mu$m-thick copper foil as a negative electrode current collector, dried at 100°C, and pressed to obtain a negative electrode plate.

3) Separator

A polyethylene (PE) separator (celgard) was used.

4) Preparation of electrolyte solution

Ethylene carbonate (EC) and propylene carbonate (PC) of the same volume were mixed uniformly to obtain an organic solvent. $NaPF_6$ was dissolved uniformly in the organic solvent to obtain an electrolyte solution in which the concentration of $NaPF_6$ was 1 mol/L.

5) Preparation of battery cell

The above-mentioned positive electrode plate, separator, and negative electrode plate were stacked in order, and the electrolyte solution was added and sealed to obtain a sodium-ion battery.

[Preparation Example I-1] to [Preparation Example I-4], and [Preparation Example I-14]

Except that the positive electrode active material, the volumetric energy density, the gravimetric energy density and the thickness of the battery cells I-1 to I-4 and I-14 were changed as shown in Table 1, the same operations were performed as in Preparation Example I-1 to obtain the Preparation Examples I-1to I-4, and Preparation Example I-14.

[Preparation Example I-5]

1) Preparation of positive electrode plate:

The positive electrode active material lithium iron phosphate ($LiFePO_4$), the conductive agent superconducting carbon black SP and the binder polyvinylidene fluoride (PVDF) were dispersed at a mass ratio of 95:3:2 in N- methyl pyrrolidone (NMP) as a solvent, and mixed uniformly to prepare a positive electrode slurry. The positive electrode slurry was uniformly coated on an aluminum foil as a positive electrode current collector, and then oven dried, cold pressed, sliced and cut to obtain a positive electrode plate.

2) Preparation of negative electrode plate

The negative electrode active material graphite, the conductive agent superconducting carbon black SP, the binder SBR and the thickener CMC-Na, were dispersed at a mass ratio of 96:1:1:2 in deionized water as a solvent, and mixed uniformly to prepare a negative electrode slurry. Then, the negative electrode slurry was uniformly coated on a copper foil as a negative electrode current collector, and then oven dried, cold pressed, sliced and cut to obtain a negative electrode plate.

3) Separator

A polyethylene film was used as the separator.

4) Preparation of electrolyte solution

Ethylene carbonate (EC), dimethyl carbonate (DMC), and diethyl carbonate (DEC) were mixed at a volume ratio of 1:1:1 to obtain an organic solvent, and then fully dried lithium salt $LiPF_6$ was dissolved in the mixed organic solvent, to formulate an electrolyte solution with a concentration of 1 mol/L.

5) Preparation of battery cell

The positive electrode plate, the separator and the negative electrode plate were stacked in sequence, in such a manner that the separator was positioned between the positive electrode plate and the negative electrode plate for separation, and then wound to obtain a bare battery cell. The bare battery cell was placed in an outer package shell, and dried. The electrolyte solution was injected. After vacuum encapsulating, standing, formation, shaping and other procedures, a first battery cell I-5 was obtained.

[Preparation Example I-6] to [Preparation Example I-13], and [Preparation Example I-15] to [Preparation Example I-23]

Except that the positive electrode active material, the volumetric energy density, the gravimetric energy density, and the thickness of the battery cells I-6 to I-13, and I-15 to I-23 were changed as shown in Table 1, the same operations were performed as in Preparation Example I-5 to obtain the first battery cells I-6 to I-13 and the first battery cells I-15 to I-23.

II. Preparation of second battery cell

[Preparation Example II-1], and [Preparation Example II-2]

Except that the positive electrode active material, the volumetric energy density, the gravimetric energy density and the thickness of the battery cells II-1 and II-2 were changed as shown in Table 2, the same operations were performed as in Preparation Example I-5 to obtain the second battery cells II-1 and II-2.

[Preparation Example II-3]

1) Preparation of positive electrode plate:

The positive electrode active material $LiNi_{0.9}Co_{0.05}Mn_{0.05}O_2$, the conductive agent superconducting carbon black SP and the binder polyvinylidene fluoride (PVDF) were dispersed in N-methyl pyrrolidone (NMP) as a solvent, and mixed uniformly to obtain a positive electrode slurry. Then, the positive electrode slurry was evenly coated on an aluminum foil as a positive electrode current collector, and then oven dried, cold pressed, sliced and cut to obtain a positive electrode plate.
The mass ratio of the positive electrode active material, the conductive agent carbon black, and the binder PVDF was 96.5:1.5:2, and the coating weight per unit area of the positive electrode active material was 0.30 g/1540.25 $mm^2$.

2) Preparation of negative electrode plate

The negative electrode active material graphite, the conductive agent superconducting carbon black SP, the binder SBR and the thickener CMC-Na, were dispersed at a mass ratio of 96:1:1:2 in deionized water as a solvent, and mixed uniformly to prepare a negative electrode slurry. Then, the negative electrode slurry was uniformly coated on a copper foil as a negative electrode current collector, and then oven dried, cold pressed, sliced and cut to obtain a negative electrode plate.

3) Separator

A polyethylene film was used as the separator.

4) Preparation of electrolyte solution

Ethylene carbonate (EC), dimethyl carbonate (DMC), and diethyl carbonate(DEC) were mixed uniformly at a weight ratio of 1:1:1 to obtain an organic solvent. Then fully dried lithium salt $LiPF_6$ was dissolved in the mixed organic solvent, to formulate a 1 mol/L electrolyte solution.

5) Preparation of battery cell

The positive electrode plate, the separator and the negative electrode plate were stacked in sequence, so that the separator was positioned between the positive electrode plate and the negative electrode plate for separation, and then wound to obtain a bare battery cell. The bare battery cell was placed in an outer package shell, and dried. Then, the electrolyte solution was injected. After vacuum encapsulating, standing, formation, shaping and other procedures, a second battery cell II-3 was obtained.

[Preparation Example II-4] and [Preparation Example II-8]

Except that the positive electrode active material, the volumetric energy density, the gravimetric energy density and the thickness of the battery cells II-4 and II-8 were changed as shown in Table 2, the same operations were performed as in Preparation Example II-3 to obtain the second battery cells II-4 to II-8.

Table 1

| First battery cell | Positive electrode active material | Volumetric energy density E1 (Wh/L) | Gravimetric energy density G1 (Wh/kg) | Thickness T1 (unit thickness) |
|---|---|---|---|---|
| I-1 | $Na_3V_2(PO_4)_2F_3$ | 155 | 65 | 1.01 |
| I-2 | $Na_3V_2(PO_4)_2O_2F$ | 160 | 70 | 2 |
| I-3 | $Na_2MnFe(CN)_6.2H_2O$ | 200 | 110 | 10 |
| I-4 | $Na_{0.9}Cu_{0.21}Fe_{0.3}Mn_{0.44}$ $(NiTiMg)_{0.05}O_2$ | 350 | 190 | 20 |
| I-5 | LiFePO4 | 305 | 155 | 1.01 |
| I-6 | LiFePO4 | 305 | 155 | 1.5 |
| I-7 | LiFePO4 | 305 | 155 | 10 |
| I-8 | LiFePO4 | 305 | 155 | 20 |
| I-9 | LiFePO4 | 305 | 155 | 1.02 |
| I-10 | LiFePO4 | 310 | 160 | 1.05 |
| I-11 | LiFePO4 | 320 | 170 | 2.1 |
| I-12 | LiFePO4 | 330 | 175 | 5 |
| I-13 | LiFePO4 | 370 | 180 | 20 |
| I-14 | $Na_3V_2(PO_4)_3$ | 110 | 50 | 1.01 |
| I-15 | LiFePO4 | 450 | 220 | 21 |
| I-16 | LiFePO4 | 450 | 220 | 1.01 |
| I-17 | LiFe0.4Mn0.6PO4 | 495 | 235 | 2 |
| I-18 | LiFePO4 | 450 | 220 | 10 |
| I-19 | LiFePO4 | 450 | 220 | 20 |
| I-20 | LiFePO4 | 450 | 220 | 1.5 |
| I-21 | LiFePO4 | 450 | 220 | 1.05 |
| I-22 | LiFePO4 | 260 | 140 | 1 |
| I-23 | LiFePO4 | 450 | 220 | 21 |

Table 2

| Second battery cell | Positive electrode active material | Volumetric energy density E1 (Wh/L) | Gravimetric energy density G1 (Wh/kg) | Thickness T1 (unit thickness) |
|---|---|---|---|---|
| II-1 | LiFePO4 | 450 | 220 | 1 |
| II-2 | LiFe0.4Mn0.6PO4 | 500 | 240 | 1 |

(continued)

| Second battery cell | Positive electrode active material | Volumetric energy density E1 (Wh/L) | Gravimetric energy density G1 (Wh/kg) | Thickness T1 (unit thickness) |
|---|---|---|---|---|
| II-3 | LiNi0.90Co0.05Mn0.05O2 | 710 | 350 | 1 |
| II-4 | LiNi0.70Co0.05Mn0.25O2 | 650 | 270 | 1 |
| II-5 | LiNi0.75Mn0.25O2 | 580 | 250 | 1 |
| II-6 | LiNi0.96Co0.03Mn0.01O2 | 755 | 360 | 1 |
| II-7 | LiNi0.33Co0.33Mn0.33O2 | 500 | 240 | 1 |
| II-8 | LiNi0.8Co0.1Mn0.1O2 | 690 | 350 | 1 |

(II) Assembly of battery module

[Example 1]

5 first battery cells I-1 and 1 second battery cell II-1 were arranged along the thickness direction D1 to form a battery module.

[Examples 2-47] and [Comparative Examples 1-5]

The types, number, and arrangement of the first and second battery cells used in each example were shown in Tables 3 and 4. The operations were the same as those in Example 1, to assemble a battery module.

(III) Performance test results of battery cell and battery module

1. Performance test of battery cell

(1) Energy density

The volumetric energy density (unit Wh/L) is the energy (unit Wh) of the battery cell divided by the volume of the battery (length x width x height, unit L).
The gravimetric energy density (unit Wh/kg) is the energy of the battery cell (unit Wh) divided by the weight of the battery (unit kg).
The specific test method was as follows:
The battery cells to be tested were selected. Using the battery cell charging and discharging machine + high and low temperature box, the full charge energy (Wh) and discharge energy (Wh) of the battery cell was tested at a standard rate and 25°C. The discharge energy was the energy value of the battery cell. The charge and discharge rate was 0.33C (C represents the rated capacity of the battery cell, the charging/discharging current is the rate multiplying the rated capacity of the battery cell, and the rated capacity is based on the capacity of the battery cell given in the GBT certification document of the battery cell).
The test procedure was as follows: 1) The battery cell was allowed to stand still at 25°C for 30 min. 2) Then the battery cell was discharged at a constant current of 0.33C to an end-of-discharge voltage (for example, 2.5V-2.8V for battery cells based on NCM chemical system, and 2.0V~ 2.5V for battery cells based on LFP chemical system ), and then allowed to stand for 30 min. 3) Then the battery cell was charged at a constant current of 0.33C to an end-of-charge voltage (for example, 4.2V, 4.25V, 4.3V, 4.35V, 4.4V or 4.45V for battery cells based on NCM chemical system battery according to the specific type of the battery cell; and generally 3.65V or 3.8V for battery cells based on LFP chemical system, and the end-of-charge voltage and end-of-discharge voltage of the battery cell should refer to the design and recommendation of the battery manufacturer for specific battery cell product), and then charged at a constant voltage to a current of <0.05C, and allowed to stand for 30 min. 4) The battery cell was discharged at a constant current of 0.33C to an end-of-discharge voltage, and then allowed to stand for 30 min. At this time, the measured discharge energy was the energy value of the battery cell. For relevant terms and test methods, refer to GB/T 19596, GB/T 31484-2015, GB/T 31485-2015, GB/T 31486-2015 and "Safety Requirements for Traction Batteries for Electric Vehicles".

2. Performance test results of battery module

(1) Calculation of rate of improvement of overall volumetric energy density

Rate of improvement of overall volumetric energy density = (overall equivalent volumetric energy density - energy density of the first battery cell) / energy density of the first battery cell * 100%

The overall equivalent volumetric energy density=$(E1*T1/T2*a/b+E2)/(T1/T2*a/b+1)$, where E1 is the volumetric energy density of the first battery cell, E2 is the volumetric energy density of the second battery cell, T1/T2 is the thickness ratio of the first battery cell and the second battery cell, and a/b is the number ratio of the first battery cell and the second battery cell.

(2) Thermal spread test

Test 1: Heat-triggered thermal runaway test of module: Refer to the document No. [2016]377 of the Ministry of Industry and Information Technology on Safety Technical Conditions for Electric Buses.
Whether heat would spread from a battery cell in the module to adjacent battery cells after thermal runaway caused by heating was tested. For a test module composed of two or more battery cells to be tested, whether a heat insulation pad needed to be added between the cells and the thickness of the heat insulation pad, and whether the water circulation needed to be activated were determined according to specific scenarios. The method for triggering thermal runaway by heating was selected, such as heat plate/heat plate heating method. The battery was fully charged. The simple module was fixed by a clamp, and the heat plate was provided close to the large surface of the first battery cell. The simple module was fixed with a clamp of two steel plates.
The heat plate was connected to a power source, the power source for the heat plate device was turned on to start heating until thermal runaway occurred to the first battery cell. Then the heat plate was turned off, and the time when thermal runaway of the second/Nth battery cell occurred was observed and recorded. The phenomena at the occurrence of thermal runaway were also recorded, such as whether there was gas/liquid/solid leakage, and whether there was fire, and explosion, etc.
Test 2: Needle puncture triggered thermal runaway test of module: Refer to GB/T 31485-2015. Specific test methods:
Whether heat would spread from a battery cell in the module to adjacent battery cells after thermal runaway caused by needle puncture was tested. For a test module composed of battery cells to be tested, whether a heat insulation pad needed to be added between the cells and the thickness of the heat insulation pad, and whether the water circulation needed to be activated were determined according to specific scenarios. The battery cell was fully charged, and the simple module was fixed by a clamp of two steel plates with holes. The first battery cell was penetrated through by a $\Phi3$~$\Phi8$ mm high-temperature tolerant stainless steel needle (the needle cone angle is 20°-60°, and the surface of the needle is smooth, and has no rust, oxide scales and oil stains), at a speed of 0.1-40 mm/s, from a direction perpendicular to the electrode plate of the battery cell to trigger thermal runaway. The time when the thermal runaway of the second/Nth adjacent cell occurred was recorded. The phenomena at the occurrence of thermal runaway were also recorded, such as whether there was gas/liquid/solid leakage, and whether there was fire, and explosion, etc.
The above performance tests were carried out on Examples 1 to 47 and Comparative Examples 1 to 5. The results are shown in Tables 3 and 4.

Table 3

| | First battery cell | Second battery cell | E1 | G1 | TI/T 2 | E2 | G2 | EI/E 2 | GI/G2 | a/b | (E1*T1)/(E2*T2) | Position and arrangement of first battery cell | TI/T 2*a/ b | Overall equivalent volumetric energy density | Rate of im-provement of overall equiva-lent volumetric energy density | Overall equivalent gravimetric ener-gy density | Thermal spread of module |
|---|---|---|---|---|---|---|---|---|---|---|---|---|---|---|---|---|---|
| Example 1 | Battery cell 1-1 | Battery cell II-1 | 155 | 65 | 1.01 | 450 | 220 | 0.34 | 0.30 | 5 | 0.35 | Left side | 5.05 | 204 | 31.46% | 91 | No flame and no smoke |
| Example 2 | Battery cell 1-2 | Battery cell II-1 | 160 | 70 | 2 | 450 | 220 | 0.36 | 0.32 | 5 | 0.71 | Left side | 10.0 0 | 186 | 16.48% | 95 | No flame and no smoke |
| Example 3 | Battery cell 1-3 | Battery cell II-1 | 200 | 110 | 10 | 450 | 220 | 0.44 | 0.50 | 5 | 4.44 | Left side | 50.0 0 | 205 | 2.45% | 128 | No flame and no smoke |
| Example 4 | Battery cell 1-4 | Battery cell II-1 | 350 | 190 | 20 | 450 | 220 | 0.78 | 0.86 | 5 | 15.56 | Left side | 100.00 | 351 | 0.28% | 195 | No flame and no smoke |
| Example 5 | Battery cell 1-2 | Battery cell II-1 | 160 | 70 | 20 | 450 | 220 | 0.36 | 0.32 | 10 | 7.11 | Four sides | 200.00 | 161 | 0.90% | 84 | No flame and no smoke |
| Example 6 | Battery cell 1-2 | Battery cell II-1 | 160 | 70 | 20 | 450 | 220 | 0.36 | 0.32 | 50 | 7.11 | Four sides | 1000 00 | 160 | 0.18% | 73 | No flame and no smoke |
| Example 7 | Battery cell 1-2 | Battery cell II-1 | 160 | 70 | 2 | 450 | 220 | 0.36 | 0.32 | 1 | 0.71 | Four sides | 2.00 | 257 | 60.42% | 145 | No flame and no smoke |
| Example 8 | Battery cell 1-2 | Battery cell II-1 | 160 | 70 | 2 | 450 | 220 | 0.36 | 0.32 | 10 | 0.71 | Four sides | 20.0 0 | 174 | 8.63% | 84 | No flame and no smoke |
| Example 9 | Battery cell 1-2 | Battery cell II-1 | 160 | 70 | 2 | 450 | 220 | 0.36 | 0.32 | 50 | 0.71 | Four sides | 100.00 | 163 | 1.79% | 73 | No flame and no smoke |

| | First battery cell | Second battery cell | E1 | G1 | TI/T 2 | E2 | G2 | EI/E 2 | GI/G2 | a/b | (E1*T1)/(E2*T2) | Position and arrangement of first battery cell | TI/T 2*a/b | Overall equivalent volumetric energy density | Rate of improvement of overall equivalent volumetric energy density | Overall equivalent gravimetric energy density | Thermal spread of module |
|---|---|---|---|---|---|---|---|---|---|---|---|---|---|---|---|---|---|
| Example 10 | Battery cell 1-5 | Battery cell II-1 | 305 | 155 | 1.01 | 450 | 220 | 0.68 | 0.70 | 5 | 0.68 | Right side | 5.05 | 329 | 7.86% | 166 | No flame and no smoke |
| Example 11 | Battery cell 1-6 | Battery cell II-1 | 305 | 155 | 1.5 | 450 | 220 | 0.68 | 0.70 | 5 | 1.02 | Right side | 7.50 | 322 | 5.59% | 166 | No flame and no smoke |
| Example 12 | Battery cell 1-7 | Battery cell II-1 | 305 | 155 | 10 | 450 | 220 | 0.68 | 0.70 | 5 | 6.78 | Right side | 50.0 0 | 308 | 0.93% | 166 | No flame and no smoke |
| Example 13 | Battery cell 1-8 | Battery cell II-1 | 305 | 155 | 20 | 450 | 220 | 0.68 | 0.70 | 5 | 13.56 | Right side | 100. 00 | 306 | 0.47% | 166 | No flame and no smoke |
| Example 14 | Battery cell 1-8 | Battery cell II-1 | 305 | 155 | 20 | 450 | 220 | 0.68 | 0.70 | 10 | 13.56 | Alternate arrangement starting from the left side | 200. 00 | 306 | 0.24% | 161 | No flame and no smoke |
| Example 15 | Battery cell 1-8 | Battery cell II-1 | 305 | 155 | 20 | 450 | 220 | 0.68 | 0.70 | 50 | 13.56 | Alternate arrangement starting from the left side | 1000 00 | 305 | 0.05% | 156 | No flame and no smoke |
| Example 16 | Battery cell 1-6 | Battery cell II-1 | 305 | 155 | 1.5 | 450 | 220 | 0.68 | 0.70 | 1 | 1.02 | Alternate arrangement starting from the left side | 1.50 | 363 | 19.02% | 188 | No flame and no smoke |
| Example 17 | Battery cell 1-6 | Battery cell II-1 | 305 | 155 | 1.5 | 450 | 220 | 0.68 | 0.70 | 10 | 1.02 | Alternate arrangement starting from the left side | 15.0 0 | 314 | 2.97% | 161 | No flame and no smoke |

EP 4 276 996 A1

| | First bat-tery cell | Second battery cell | E1 | G1 | TI/T 2 | E2 | G2 | EI/E 2 | GI/G2 | a/b | (E1*T1)/(E2*T2) | Position and arrangement of first battery cell | TI/T 2*a/ b | Overall equivalent volumetric energy den-sity | Rate of im-provement of overall equiva-lent volumetric energy density | Overall equivalent gravime tric ener-gy density | Thermal spread of module |
|---|---|---|---|---|---|---|---|---|---|---|---|---|---|---|---|---|---|
| Example 18 | Battery cell 1-6 | Battery cell II-1 | 305 | 155 | 1.5 | 450 | 220 | 0.68 | 0.70 | 50 | 1.02 | Alternate arrangement starting from the left side | 75.0 0 | 307 | 0.63% | 156 | No flame and no smoke |
| Example 19 | Battery cell 1-1 | Battery cell II-1 | 160 | 70 | 1.01 | 450 | 220 | 0.36 | 0.32 | 50 | 0.36 | In the middle | 50.5 0 | 166 | 3.52% | 73 | No flame and no smoke |
| Example 20 | Battery cell 1-9 | Battery cell II-1 | 305 | 155 | 1.02 | 450 | 220 | 0.68 | 0.70 | 50 | 0.69 | In the middle | 51.0 0 | 308 | 0.91% | 156 | No flame and no smoke |
| Example 21 | Battery cell 1-10 | Battery cell II-1 | 310 | 160 | 1.05 | 450 | 220 | 0.69 | 0.73 | 50 | 0.72 | In the middle | 52.5 0 | 313 | 0.84% | 161 | No flame and no smoke |
| Example 22 | Battery cell 1-11 | Battery cell II-1 | 320 | 170 | 2.1 | 450 | 220 | 0.71 | 0.77 | 50 | 1.49 | In the middle | 105.00 | 321 | 0.38% | 171 | No flame and no smoke |
| Example 23 | Battery cell 1-12 | Battery cell II-1 | 330 | 175 | 5 | 450 | 220 | 0.73 | 0.80 | 50 | 3.67 | In the middle | 250.00 | 330 | 0.14% | 176 | No flame and no smoke |
| Example 24 | Battery cell 1-13 | Battery cell II-1 | 370 | 180 | 20 | 450 | 220 | 0.82 | 0.82 | 50 | 16.44 | In the middle | 1000 00 | 370 | 0.02% | 181 | No flame and no smoke |
| Comparative Example 1 | Battery cell 1-14 | Battery cell II-1 | 110 | 50 | 1.01 | 450 | 220 | 0.24 | 0.23 | 5 | 0.25 | Left side | 5.05 | 166 | 51.09% | 78 | No flame and no smoke |

(continued)

| | First battery cell | Second battery cell | E1 | G1 | TI/T 2 | E2 | G2 | EI/E 2 | GI/G2 | a/b | (E1*T1)/(E2*T2) | Position and arrangement of first battery cell | TI/T 2*a/b | Overall equivalent volumetric energy density | Rate of improvement of overall equivalent volumetric energy density | Overall equivalent gravimetric energy density | Thermal spread of module |
|---|---|---|---|---|---|---|---|---|---|---|---|---|---|---|---|---|---|
| Comparative Example 2 | Battery cell 1-15 | Battery cell II-2 | 450 | 220 | 21 | 500 | 240 | 0.90 | 0.92 | 50 | 18.90 | Left side | 1050 00 | 450 | 0.01% | 220 | No flame and no smoke |

Table 4

| | First battery cell | Second battery cell | E1 | G1 | TII T2 | E 2 | G2 | E1/E2 | G1/G2 | a/ b | (EI*T1)/(E2*T2) | Position and arrangement of first battery cell | TII T2* a/b | Overall equivalent volumetri c energy density | Rate of improvement of overall equivalent volumetric energy density | Overal 1 equivalent gravim etric energy density | Thermal spread of module |
|---|---|---|---|---|---|---|---|---|---|---|---|---|---|---|---|---|---|
| Example 25 | Battery cell 1-16 | Battery cell II-3 | 450 | 220 | 1.01 | 71 0 | 35 0 | 0.6 3 | 0.6 3 | 5 | 0.64 | Alternate arrangement starting from the left side | 5.05 | 493 | 9.55% | 242 | No flame, and a little smoke |
| Example 26 | Battery cell 1-17 | Battery cell II-3 | 495 | 235 | 2 | 71 0 | 35 0 | 0.70 | 0.6 7 | 5 | 1.39 | Alternate arrangement starting from the left side | 10.0 0 | 515 | 3.95% | 254 | No flame, and a little smoke |
| Example 27 | Battery cell 1-18 | Battery cell II-3 | 450 | 220 | 10 | 71 0 | 35 0 | 0.6 3 | 0.6 3 | 5 | 6.34 | Alternate arrangement starting from the left side | 50.0 0 | 455 | 1.13% | 242 | No flame, and a little smoke |
| Example 28 | Battery cell 1-19 | Battery cell II-3 | 450 | 220 | 20 | 71 0 | 35 0 | 0.6 3 | 0.6 3 | 5 | 12.68 | Alternate arrangement starting from the left side | 100. 00 | 453 | 0.57% | 242 | No flame and no smoke |
| Example 29 | Battery cell 1-19 | Battery cell II-3 | 450 | 220 | 20 | 71 0 | 35 0 | 0.6 3 | 0.6 3 | 1 0 | 12.68 | Alternate arrangement starting from the left side | 200. 00 | 451 | 0.29% | 232 | No flame and no smoke |
| Example 30 | Battery cell 1-19 | Battery cell II-3 | 450 | 220 | 20 | 71 0 | 35 0 | 0.6 3 | 0.6 3 | 5 0 | 12.68 | Alternate arrangement starting from the left side | 100 0.00 | 450 | 0.06% | 223 | No flame and no smoke |
| Example 31 | Battery cell 1-17 | Battery cell II-3 | 495 | 235 | 2 | 71 0 | 35 0 | 0.70 | 0.6 7 | 1 | 1.39 | Alternate arrangement starting from the left side | 200 | 567 | 14.48% | 293 | No flame, and a lot of smoke |

(continued)

| | First battery cell | Second battery cell | E1 | G1 | TII T2 | E2 | G2 | E1/E2 | G1/G2 | a/b | (E1*T1)/(E2*T2) | Position and arrangement of first battery cell | TII T2* a/b | Overall equivalent volumetric energy density | Rate of improvement of overall equivalent volumetric energy density | Overall equivalent gravimetric energy density | Thermal spread of module |
|---|---|---|---|---|---|---|---|---|---|---|---|---|---|---|---|---|---|
| Example 32 | Battery cell 1-17 | Battery cell II-3 | 495 | 235 | 2 | 710 | 350 | 0.70 | 0.67 | 2 | 1.39 | Alternate arrangement starting from the left side | 4.00 | 538 | 8.69% | 273 | No flame, and a lot of smoke |
| Example 33 | Battery cell 1-17 | Battery cell II-3 | 495 | 235 | 2 | 710 | 350 | 0.70 | 0.67 | 10 | 1.39 | Alternate arrangement starting from the left side | 200.0 | 505 | 2.07% | 245 | No flame, and a little smoke |
| Example 34 | Battery cell 1-17 | Battery cell II-3 | 495 | 235 | 2 | 710 | 350 | 0.70 | 0.67 | 50 | 1.39 | Alternate arrangement starting from the left side | 100.00 | 497 | 0.43% | 237 | No flame, and a little smoke |
| Example 35 | Battery cell 1-16 | Battery cell II-4 | 450 | 220 | 1.01 | 650 | 270 | 0.69 | 0.81 | 5 | 0.70 | Left side | 5.05 | 483 | 7.35% | 228 | No flame, and a little smoke |
| Example 36 | Battery cell 1-20 | Battery cell II-4 | 450 | 220 | 1.5 | 650 | 270 | 0.69 | 0.81 | 5 | 1.04 | Left side | 7.50 | 474 | 5.23% | 228 | No flame, and a little smoke |
| Example 37 | Battery cell 1-18 | Battery cell II-4 | 450 | 220 | 10 | 650 | 270 | 0.69 | 0.81 | 5 | 6.92 | Left side | 50.00 | 454 | 0.87% | 228 | No flame and no smoke |
| Example 38 | Battery cell 1-19 | Battery cell II-4 | 450 | 220 | 20 | 650 | 270 | 0.69 | 0.81 | 5 | 13.85 | Left side | 100.00 | 452 | 0.44% | 228 | No flame and no smoke |
| Example 39 | Battery cell 1-19 | Battery cell II-4 | 450 | 220 | 20 | 650 | 270 | 0.69 | 0.81 | 10 | 13.85 | Four sides | 200.00 | 451 | 0.22% | 225 | No flame and no smoke |

| | First bat-tery cell | Second battery cell | E1 | G1 | TII T2 | E 2 | G2 | E1/ E2 | G1/ G2 | a/ b | (EI* T1)/ (E2* T2) | Position and arrangement of first battery cell | TII T2* a/b | Overall equivalent volumetri c energy den-sity | Rate of im-provement of overall equiva-lent volumetric energy density | Overal 1 equival ent gravim etric en-ergy den-sity | Thermal spread of module |
|---|---|---|---|---|---|---|---|---|---|---|---|---|---|---|---|---|---|
| Example 40 | Battery cell 1-19 | Battery cell II-4 | 450 | 220 | 20 | 65 0 | 27 0 | 0.6 9 | 0.8 1 | 5 0 | 13.85 | Four sides | 100 0.00 | 450 | 0.04% | 221 | No flame and no smoke |
| Example 41 | Battery cell 1-20 | Battery cell II-4 | 450 | 220 | 1.5 | 65 0 | 27 0 | 0.6 9 | 0.8 1 | 1 | 1.04 | Four sides | 1.50 | 530 | 17.78% | 245 | No flame, and a lot of smoke |
| Example 42 | Battery cell 1-20 | Battery cell II-4 | 450 | 220 | 1.5 | 65 0 | 27 0 | 0.6 9 | 0.8 1 | 2 | 1.04 | Four sides | 3.00 | 500 | 11.11% | 237 | No flame, and a lot of smoke |
| Example 43 | Battery cell 1-20 | Battery cell II-4 | 450 | 220 | 1.5 | 65 0 | 27 0 | 0.6 9 | 0.8 1 | 1 0 | 1.04 | Four sides | 15.0 0 | 463 | 2.78% | 225 | No flame and no smoke |
| Example 44 | Battery cell 1-20 | Battery cell II-4 | 450 | 220 | 1.5 | 65 0 | 27 0 | 0.6 9 | 0.8 1 | 5 0 | 1.04 | Four sides | 75.0 0 | 453 | 0.58% | 221 | No flame and no smoke |
| Example 45 | Battery cell 1-21 | Battery cell II-3 | 450 | 220 | 1.05 | 71 0 | 35 0 | 0.6 3 | 0.6 3 | 1 0 | 0.67 | Alternate arrangement starting from the left side | 10.5 0 | 473 | 5.02% | 232 | No flame and no smoke |
| Example 46 | Battery cell 1-21 | Battery cell II-4 | 450 | 220 | 1.05 | 65 0 | 27 0 | 0.6 9 | 0.8 1 | 2 | 0.73 | Alternate arrangement starting from the left side | 2.10 | 515 | 14.34% | 237 | No flame, and a little smoke |
| Example 47 | Battery cell 1-21 | Battery cell II-5 | 450 | 220 | 1.05 | 58 0 | 25 0 | 0.7 8 | 0.8 8 | 1 | 0.81 | Alternate arrangement starting from the left side | 1.05 | 513 | 14.09% | 235 | No flame, and a little smoke |

(continued)

| | First battery cell | Second battery cell | E1 | G1 | Tll T2 | E 2 | G2 | E1/E2 | G1/G2 | a/b | (El*T1)/(E2*T2) | Position and arrangement of first battery cell | Tll T2*a/b | Overall equivalent volumetric energy density | Rate of improvement of overall equivalent volumetric energy density | Overall equivalent gravimetric energy density | Thermal spread of module |
|---|---|---|---|---|---|---|---|---|---|---|---|---|---|---|---|---|---|
| Comparative Example 3 | Battery cell 1-22 | Battery cell II-6 | 260 | 140 | 1 | 75 5 | 36 0 | 0.3 4 | 0.3 9 | 5 0 | 0.34 | Left side | 50.0 0 | 270 | 3.73% | 144 | Smoke and sparks |
| Comparative Example 4 | Battery cell 1-23 | Battery cell II-7 | 450 | 220 | 21 | 50 0 | 24 0 | 0.9 0 | 0.9 2 | 0. 5 | 18.90 | Alternate arrangement | 10.5 0 | 454 | 0.97% | 233 | Fire and explosion |
| Comparative Example 5 | Battery cell 1-21 | Battery cell II-8 | 450 | 220 | 1.05 | 69 0 | 35 0 | 0.6 5 | 0.6 3 | 0. 5 | 0.68 | Alternate arrangement | 0.53 | 607 | 34.97% | 307 | Fire and explosion |

(IV) Comparison of test results of various examples and comparative examples

From the results shown in Tables 3 and 4, it can be seen that Examples 1-47 satisfying the conditions that the number a of the first battery cell is greater than the number b of the second battery cell, and $0.35 \leq (E1*T1)/(E2*T2) \leq 18$ shows a higher rate of improvement of overall volumetric energy density and a higher overall volumetric energy density. However, in Comparative Examples 1 and 2, the value of $(E1*T1)/(E2*T2)$ is not within the above range, and the rate of improvement of the overall volumetric energy density is low or the overall volumetric energy density is low. In Comparative Example 3, the value of $(E1*T1)/(E2*T2)$ was low, and there is smoke and sparks in the thermal spread test. In Comparative Examples 4 and 5, the number ratio a/b of the first battery cell and the second battery cell is 0.5, fire and explosion occur in the thermal spread test, and the safety is poor.

In addition, it can be seen from Tables 3 and 4 that when the volumetric energy density E2 of the second battery cell is greater than 600 Wh/L, Examples 25 to 47 satisfying the conditions that $0.35 \leq (E1*T1)/(E2*T2) \leq 18$, and $(T1/T2)*(a/b) \geq 1.05$ have no flame in the thermal spread test. Further, Examples 25 to 30, Examples 33 to 40, and Examples 43 to 45 satisfying the conditions that $(T1/T2)*(a/b) \geq 5$ have no flame and no smoke, or have no flame and a little smoke in the thermal spread test, showing good safety. Examples 1 to 24, in which the volumetric energy density E2 of the second battery cell is less than 600 Wh/L, have no flame and no smoke in the thermal spread test, and in Examples 1 to 5, Examples 7 to 14, and Examples 16 to 23 satisfying $1 \leq (T1/T2)*(a/b) \leq 250$, the rate of improvement of the overall volumetric energy density is higher.

In addition, it can be seen from Tables 3 and 4 that when the number a of the first battery cell and the number b of the second battery cell satisfy $1 \leq a/b \leq 10$, and optionally $2 \leq a/b \leq 10$, the rate of improvement overall volumetric energy density is higher and the safety is better.

Moreover, it can be seen from Tables 3 and 4 that when the ratio of the gravimetric energy density G1 of the first battery cell to the gravimetric energy density G2 of the second battery cell satisfies $0.3 \leq G1/G2 \leq 1$, a better rate of improvement of overall volumetric energy density and safety can be obtained.

Furthermore, it can be seen from Tables 3 and 4 that when the ratio of the volumetric energy density E1 of the first battery cell and the volumetric energy density E2 of the second battery cell satisfy $0.3 \leq E1/E2 \leq 1$, a better rate of improvement of overall volumetric energy density and safety can be obtained.

It should be noted that the present application is not limited to the embodiments above. The above embodiments are merely exemplary, and embodiments having substantially the same technical idea and the same effects within the scope of the technical solutions of the present application are all included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

**Claims**

1. A battery module, comprising: a first battery cell and a second battery cell, wherein

   the number a of the first battery cell is greater than or equal to the number b of the second battery cell; and, assuming that the product of the volumetric energy density E1 and the thickness T1 of the first battery cell is X1, and the product of the volumetric energy density E2 and the thickness T2 of the second battery cell is X2, X1/X2 satisfies: $0.35 \leq X1/X2 \leq 18$.

2. The battery module according to claim 1, wherein

   X1/X2 satisfies: $0.45 \leq X1/X2 \leq 4.5$, and
   optionally, $0.7 \leq X1/X2 \leq 1.4$.

3. The battery module according to claim 1 or 2, wherein
   the number a of the first battery cell and the number b of the second battery cell satisfy: $1 \leq a/b \leq 50$ and optionally $2 \leq a/b \leq 10$.

4. The battery module according to any one of claims 1 to 3, wherein

   when the volumetric energy density E2 of the second battery cell is greater than 600 Wh/L,
   the ratio T1/T2 of the thickness T1 of the first battery cell to the thickness T2 of the second battery cell, and the ratio of the number a of the first battery cell to the number b of the second battery cell satisfy:

1.05≤(T1/T2)*(a/b)≤1000, and optionally 5≤(T1/T2)*(a/b)≤200; and
when the volumetric energy density E2 of the second battery cell is less than 600 Wh/L,
the ratio T1/T2 of the thickness T1 of the first battery cell to the thickness T2 of the second battery cell, and the ratio of the number a of the first battery cell to the number b of the second battery cell satisfy: 1≤(T1/T2)*(a/b)≤1000 and optionally 1≤(T1/T2)*(a/b)≤250.

5.  The battery module according to any one of claims 1 to 4, wherein

    the thickness T1 of the first battery cell and the thickness T2 of the second battery cell satisfy: 1<T1/T2≤20, and optionally, 1.02≤T1/T2≤5, and
    optionally, 1.05≤T1/T2≤2.1.

6.  The battery module according to any one of claims 1 to 5, wherein

    the volume V1 of the first battery cell and the volume V2 of the second battery cell satisfy: 1≤V1/V2≤20, and optionally, 1≤V1/V2≤5, and
    optionally, 1≤V1/V2≤2.1.

7.  The battery module according to any one of claims 1 to 6, wherein
    the volumetric energy density E1 of the first battery cell and the volumetric energy density E1 of the second battery cell satisfy: 0.3≤E1/E2≤1.

8.  The battery module according to any one of claims 1 to 7, wherein
    the volumetric energy density E1 of the first battery cell satisfies: 155 Wh/L≤E1≤500 Wh/L.

9.  The battery module according to any one of claims 1 to 8, wherein
    the volumetric energy density E2 of the second battery cell satisfies: 450 Wh/L≤E2≤800 Wh/L.

10. The battery module according to any one of claims 1 to 9, wherein
    the gravimetric energy density G1 of the first battery cell and the gravimetric energy density G2 of the second battery cell satisfy: 0.3≤G1/G2≤1.

11. The battery module according to claim 10, wherein
    the gravimetric energy density G1 of the first battery cell satisfies: 65 Wh/kg≤G1≤235 Wh/kg.

12. The battery module according to claim 10, wherein
    the gravimetric energy density G2 of the second battery cell satisfies: 220 Wh/kg≤G2≤400 Wh/kg.

13. The battery module according to any one of claims 1 to 12, wherein

    in a cross section perpendicular to the thickness T1 of the first battery cell, the first battery cell and the second battery cell have substantially the same cross-sectional area,
    the height H1 of the first battery cell and the height H2 of the second battery cell satisfy: 0.9≤H1/H2≤1.1, and optionally H1/H2=1, and
    the width W1 of the first battery cell and the width W2 of the second battery cell satisfy: 0.9≤W1/W2≤1.1, and optionally W1/W2=1.

14. The battery module according to any one of claims 1 to 13, wherein
    the first battery cell or a battery group formed of a plurality of parallelly connected first battery cells is connected in series to the second battery cell or a battery group formed of a plurality of parallelly connected second battery cells.

15. The battery module according to any one of claims 1 to 14, wherein

    the first battery cell is a sodium-ion battery, and the second battery cell is a lithium-ion battery;
    or,
    the first battery cell is one or more of a lithium iron phosphate battery, a lithium manganese phosphate battery, a lithium manganese iron phosphate battery, a lithium manganate battery, a lithium titanate battery, and a lithium vanadium phosphate battery, and the second battery cell is one or more of a lithium nickel cobalt manganese oxide battery, a lithium nickel cobalt aluminum oxide battery, a lithium nickel cobalt manganese aluminum oxide battery, a lithium cobalt oxide battery, and a lithium manganese nickel oxide battery.

16. The battery module according to any one of claims 1 to 15, wherein
the second battery cells are spaced apart by a plurality of the first battery cells.

17. The battery module according to any one of claims 1 to 16, wherein
some of the second battery cells are disposed at an end or in the middle of the battery module.

18. A battery pack, comprising the battery module according to any one of claims 1 to 17.

19. An electrical apparatus, comprising the battery pack according to claim 18.

**FIG. 1**

FIG. 2

FIG. 3

FIG. 4

**FIG. 5**

**FIG. 6**

## INTERNATIONAL SEARCH REPORT

International application No.

**PCT/CN2022/079508**

### A. CLASSIFICATION OF SUBJECT MATTER

H01M 50/267(2021.01)i

According to International Patent Classification (IPC) or to both national classification and IPC

### B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, CNKI, WPI, EPODOC: 电池, 模组, 模块, 第二, 单体, 电芯, 体积能量密度, 厚度, 尺寸, 能量, 容量, 电压, batter+, cell?, module, second, volume, energy, density, capacity, voltage

### C. DOCUMENTS CONSIDERED TO BE RELEVANT

| Category* | Citation of document, with indication, where appropriate, of the relevant passages | Relevant to claim No. |
|---|---|---|
| X | WO 2022021135 A1 (NINGDE CONTEMPORARY AMPEREX TECHNOLOGY CO., LTD.) 03 February 2022 (2022-02-03) <br> description, page 20, paragraph 3 to page 26, paragraph 2, tables 1-4, and figures 1-2 | 1-19 |
| A | CN 112599932 A (WEILAI AUTOMOBILE TECHNOLOGY (ANHUI) CO., LTD.) 02 April 2021 (2021-04-02) <br> entire document | 1-19 |
| A | CN 114142139 A (SAIC VOLKSWAGEN AUTOMOTIVE CO., LTD.) 04 March 2022 (2022-03-04) <br> entire document | 1-19 |
| A | US 2006197496 A1 (TDK CORPORATION) 07 September 2006 (2006-09-07) <br> entire document | 1-19 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 November 2022** | **25 November 2022** |

| Name and mailing address of the ISA/CN <br><br> **China National Intellectual Property Administration (ISA/ CN)** <br> **No. 6, Xitucheng Road, Jimenqiao, Haidian District, Beijing 100088, China** | Authorized officer |
|---|---|
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/079508**

| Patent document cited in search report | | | Publication date (day/month/year) | Patent family member(s) | | | Publication date (day/month/year) |
|---|---|---|---|---|---|---|---|
| WO | 2022021135 | A1 | 03 February 2022 | EP | 4020691 | A1 | 29 June 2022 |
| CN | 112599932 | A | 02 April 2021 | None | | | |
| CN | 114142139 | A | 04 March 2022 | None | | | |
| US | 2006197496 | A1 | 07 September 2006 | JP | 2006216395 | A | 17 August 2006 |

Form PCT/ISA/210 (patent family annex) (January 2015)